# EUROPEAN PATENT SPECIFICATION

(11) **EP 3 666 497 B1**
(45) Date of publication and mention of the grant of the patent: **02.06.2021**
(21) Application number: 18306681.0
(22) Date of filing: 13.12.2018
(51) Int. Cl.: B29C 49/46, B29C 49/06, B29C 49/36, B29C 49/64, B29L 31/00, B67C 7/00, B67C 3/22, B67C 3/26

(54) **FILLING PLANT AND METHOD FOR PRODUCING BOTTLES AND FILLING BOTTLES WITH A POURABLE PRODUCT**
FÜLLANLAGE UND VERFAHREN ZUR HERSTELLUNG VON FLASCHEN UND ZUM BEFÜLLEN VON FLASCHEN MIT EINEM FLIESSFÄHIGEN PRODUKT
INSTALLATION DE REMPLISSAGE ET PROCÉDÉ DE PRODUCTION ET DE REMPLISSAGE DE BOUTEILLES AVEC UN PRODUIT COULANT

(43) Date of publication of application: 17.06.2020
(73) Proprietor: Sidel Participations, 76930 Octeville-sur-Mer (FR)
(72) Inventor: CENCI, Mattia, 43126 Parma (IT); FUSARO, Alessandro, 43126 Parma (IT)
(74) Representative: Sidel Group

(56) References cited:
- EP-A2- 0 464 933
- US-A- 5 759 218
- US-A1- 2013 040 009
- US-A1- 2013 078 327
- US-A1- 2014 091 499

## Description

### TECHNICAL FIELD

The present invention relates to a filling plant for producing bottles from preforms and filling bottles with a pourable product, in particular a pourable food product, even more particular a sterilized and/or sterile-processed pourable food products.

The present invention also relates to a method of producing and filling bottles with a pourable product, in particular a pourable food product, even more particular a pourable food product, even more particular a sterilized and/or sterile-processed pourable food products. Filling plants and methods for producing bottles according to the state of the art are described in US2013/078327A1, US2014/091499A1 and EP0464933A2.

### BACKGROUND ART

Filling plants for producing bottles from preforms and filling of the bottles with a pourable product, in particular a pourable food product, even more particular a sterilized and/or sterile-processed pourable food products, are known.

A typical filling plant comprises at least a first isolation chamber, a pre-heating oven at least partially arranged within the first isolation chamber and configured to pre-heat the preforms, a second isolation chamber connected to the first isolation chamber, a molding apparatus at least partially arranged within the second isolation chamber and configured to blow or compression mold the preforms so as to obtain the bottles, a third isolation chamber connected to the second isolation chamber and a filling apparatus at least partially arranged within the third isolation chamber and configured to fill the bottles.

A typical filling plant also requires to control the atmosphere within the first, second and third isolation chamber so as to produce under aseptic and/or sterile conditions. For this reason, a typical filling plant comprises a plurality of filter units, each one associated to one of the first, second and third isolation chamber and configured to filter the air to be introduced into the respective of the first, second and third isolation chamber.

Even though, the known filling plants work satisfyingly well, it is the desire to further improve the filling plants and their operation.

In particular, it is a desire to simplify such filling plants and their operation.

In particular, it is another desire to improve the efficiency of such filling plants.

### DISCLOSURE OF INVENTION

It is therefore an object of the present invention to provide in a straightforward and low-cost manner an improved filling plant for producing bottles from preforms and filling the bottles with a pourable product.

It is a further object of the present invention to provide in a straightforward and low-cost manner an improved method of producing bottles from preforms and filling the bottles with a pourable product.

According to the present invention, there is provided a filling plant and a method according to the independent claims.

Further advantageous embodiments of the filling plant and the method are specified in the dependent claims.

### BRIEF DESCRIPTION OF THE DRAWINGS

A non-limiting embodiment of the present invention will be described by way of example with reference to the accompanying drawings, in which:
Figure 1 shows a schematic top-view of a filling plant according to the present invention, with parts removed for clarity;
Figure 2 shows a schematic side-view of the filling plant of Figure 1, with parts removed for clarity.

### BEST MODES FOR CARRYING OUT THE INVENTION

Referral number 1 indicates as a whole a filling plant for producing and filling bottles, in particular plastic bottles 2, in particular under aseptic conditions.

In particular, filling plant 1 is configured to produce bottles 2 from preforms 3 and to fill bottles 2 with a pourable product, even more particular a pourable food product such as carbonated liquids (e.g. sparkling water, soft drinks and beer) or non-carbonated liquids (e.g. still water, juices, teas, sport drinks, liquid cleaners, wine, emulsions, suspensions, high viscosity liquids and beverages containing pulps).

According to a preferred non-limiting embodiment, filling plant 1 is configured to produce bottles 2 from preforms 3 by means of a molding, in particular a blow or compression molding, process.

According to a preferred non-limiting embodiment, filling plant 1 is configured to fill a sterilized and/or sterile-processed pourable food product, such as e.g. juices or milk and the like, into bottles 2.

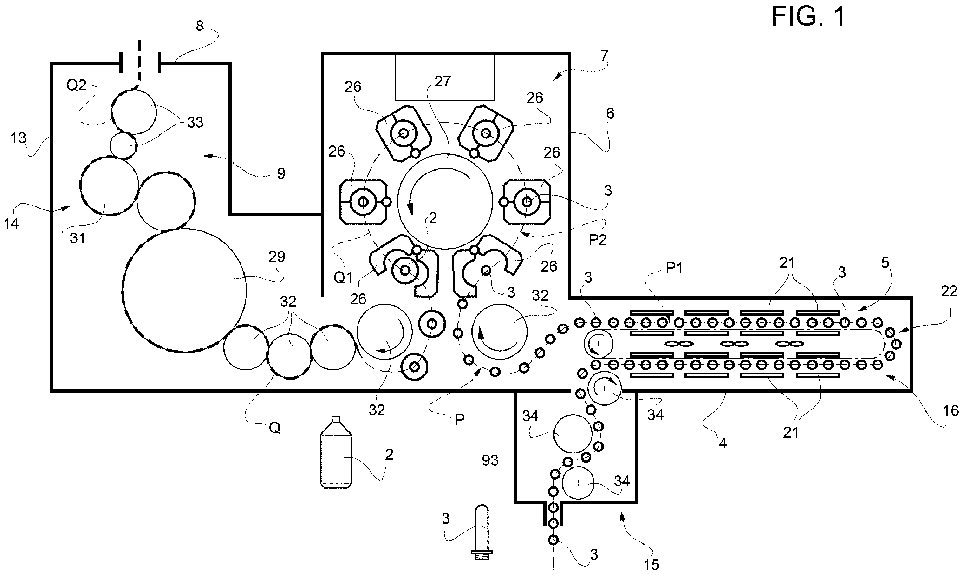

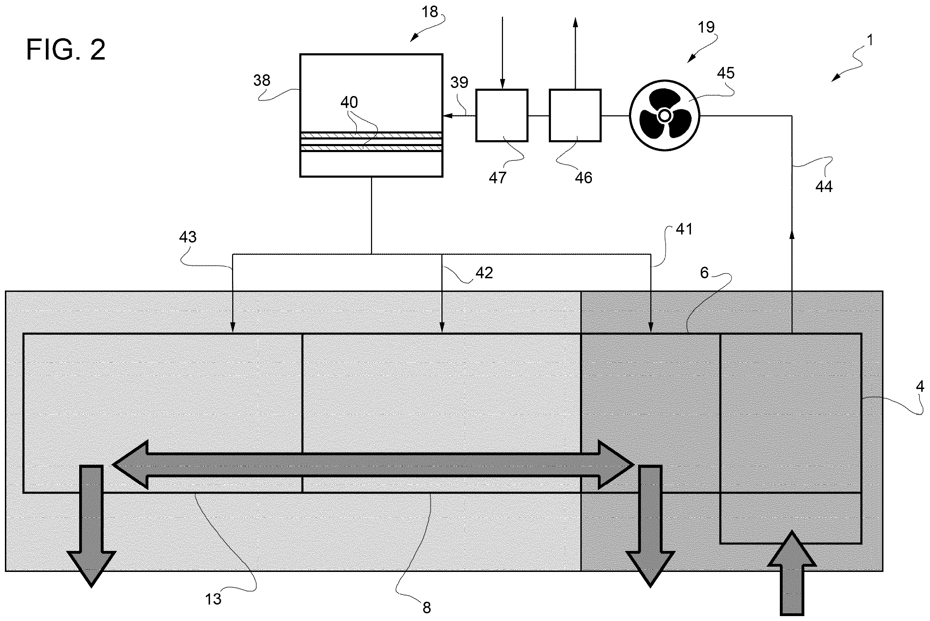

With particular reference to Figures 1 and 2, filling plant 1 comprises at least:
- a first isolation chamber 4 containing a defined and/or controlled first (sterile) gas atmosphere;
- a pre-heating oven 5 at least partially arranged within the first isolation chamber 4 and configured to pre-heat preforms 3 within isolation chamber 4;
- a second isolation chamber 6 containing a defined and/or controlled second (sterile) gas atmosphere;
- a molding apparatus 7 at least partially arranged within isolation chamber 6 and configured to mold preforms 3 into bottles 2, in particular by means of blow or compression molding, within isolation chamber 6;
- a third isolation chamber 8 containing a defined and/or controlled third (sterile) gas atmosphere; and
- a filling apparatus 9 at least partially arranged within third isolation chamber 8 and configured to fill bottles 2 with the pourable product within third isolation chamber 8.

According to a preferred non-limiting embodiment, filling plant 1 also comprises a fourth isolation chamber 13 containing a defined and/or controlled fourth (sterile) gas atmosphere and a capping apparatus 14 at least partially arranged within isolation chamber 13 and configured to receive the filled bottles 2 from filling apparatus 9 and to apply closures onto the filled bottles 2.

According to a preferred non-limiting embodiment, with the term "a defined and/or controlled (sterile) gas atmosphere" is intended to express that the gas atmosphere presents a reduced load of contaminants, in particular for allowing a treating and/or processing of preforms 3 and/or bottle 2 in a sterile environment. Preferentially but not necessarily, the term "a defined and/or controlled (sterile) gas atmosphere" also expresses that the temperature and/or humidity of the gas atmosphere is controlled.

According to a preferred non-limiting embodiment, filling plant 1 also comprises a pre-form sterilization unit 15 configured to sterilize at least the inner portion of preforms 3. In particular, sterilization unit 15 is configured to introduce a sterilization agent into preforms 3 so as to sterilize at least the inner of preforms 3 (and consecutively of bottles 2).

According to a preferred non-limiting embodiment, filling plant 1 also comprises a conveying device 16 configured to advance preforms 3 along a first advancement path P and bottles 2 along a second advancement path Q. In particular, conveying device 16 is configured to advance preforms 3 to, through and from pre-heat oven 5 to and at partially through molding apparatus 7 and to advance bottles 2 through and from molding apparatus 7 and at least to and through filling apparatus 9.

Preferentially but not necessarily, conveying device 16 is also configured to advance preforms 3 through sterilization unit 15.

Preferentially but not necessarily, conveying device 16 is also configured to advance filled bottles 2 from filling apparatus 9 to and through capping apparatus 14 and out of isolation chamber 13.

With particular reference to Figure 2, filling plant 1 also comprises:
- a first filter unit 17 associated to, in particular connected to, isolation chamber 4 and configured to filter gas, in particular air, even more particular ambient air, to be introduced into isolation chamber 4, in particular for at least partially defining and/or controlling the first gas atmosphere;
- a centralized filter unit 18 configured to filter the gas, in particular air, so as to obtain a filtered gas, in particular filtered air, and to feed and/or guide at least a first portion and at least a second portion of the filtered gas into respectively isolation chamber 6 and into isolation chamber 8 and/or at least a third portion of the filtered gas into isolation chamber 13; and
- a suction device 19 fluidically connected to isolation chamber 4 and filter unit 18 and configured to extract gas from isolation chamber 4 and to direct at least a portion of the extracted gas to filter unit 18 so that the portion of the extracted gas defines and/or forms at least a portion of the filtered gas and/or the gas to be filtered within filter unit 18 for obtaining the filtered gas.

With particular reference to Figure 1, pre-heat oven 5 comprises a plurality of heating groups 21 arranged within isolation chamber 4 and configured to heat preforms 3, in particular by means of electromagnetic irradiation, even more particular by means of infrared irradiation, during advancement along a heating portion P1 of advancement path P. In particular, heating groups 21 are arranged along heating portion P1.

According to a preferred non-limiting embodiment, conveying device 16 comprises a first conveyer 22 at least partially arranged within isolation chamber 4 and configured to advance preforms 3 (in a manner known as such) within isolation chamber 4 along heating portion P1.

According to a preferred-non-limiting embodiment, molding apparatus 7 comprises a plurality of molding units 26 arranged within isolation chamber 6 and configured to receive preforms 3 and to mold preforms 3 into bottles 2 during advancement of preforms 3 along a molding portion P2 of advancement path P.

According to a preferred non-limiting embodiment, conveying device 16 comprises a second conveyor 27 at least partially arranged within isolation chamber 6 and configured to advance preforms 3 within isolation chamber 6 along molding portion P2 and to advance the molded bottles 2 along a first portion Q1 of advancement path Q.

In particular, each molding unit 26 is configured to retain one respective preform 3 during its advancement along molding portion P2 (i.e. prior and during molding of the respective preform 3 into the respective bottle 2) and to retain one respective bottle 2 during advancement of the respective bottle 2 along portion Q1 (i.e. after molding of the respective preform 3 into the respective bottle 2).

In the specific example embodiment disclosed, second conveyor 27 comprises a first conveying carousel configured to rotate around a first rotation axis, in particular having a vertical orientation, and molding portion P2 presents an arc-shaped profile. Molding units 26 are peripherally arranged on the first conveying carousel and equally spaced around the first rotation axis.

According to a preferred non-limiting embodiment, filling apparatus 9 comprises a plurality of filling units (not shown and known as such) arranged within isolation chamber 8 and configured to fill bottles 2 with the pourable product during advancement of bottles 2 along a filling portion Q2 of advancement path Q.

According to a preferred non-limiting embodiment, conveying device 16 comprises a third conveyor 29 at least partially arranged within isolation chamber 8 and configured to advance bottles 2 within isolation chamber 8 along a filling portion Q1 of advancement path Q.

In particular, each filling unit is configured to retain and fill one respective bottle 2 during advancement along filling portion Q2.

In the specific example embodiment disclosed, third conveyor 29 comprises a second conveying carousel configured to rotate around a second rotation axis, in particular parallel to the first rotation axis, and filling portion Q2 presents an arc-shaped profile. The filling units are peripherally arranged on the second conveying carousel and equally spaced around the second rotation axis.

According to a preferred non-limiting embodiment, capping apparatus 14 comprises a plurality of capping units (not shown) arranged within isolation chamber 13 and configured to apply closures onto filled bottles 2.

According to a preferred non-limiting embodiment, conveying apparatus 16 comprises a fourth conveyor 31 configured to advance bottles 2 along a capping portion Q3 of advancement path Q.

In particular, each capping unit is configured to apply one respective closure onto one respective bottle 2 during advancement of the respective bottle 2 along capping portion Q3.

In the specific example embodiment disclosed, fourth conveyor 31 comprises a third conveying carousel configured to rotate around a third rotation axis, in particular parallel to the first and second rotation axis, and capping portion Q3 presents an arc-shaped profile. In particular, the capping units are peripherally arranged on the third conveying carousel and equally spaced around the third rotation axis.

According to a preferred non-limiting embodiment, conveying device 16 also comprises a plurality of transfer conveyors 32, in particular transfer star wheels, configured to advance preforms 3 from first conveyor 22 to second conveyor 27 and from second conveyor 27 to third conveyor 29. Preferentially but not necessarily, some of the transfer conveyors 32 are also configured to transfer bottles 2 from third conveyor 29 to fourth conveyor 31.

According to a preferred non-limiting embodiment, each transfer conveyor 32 is at least partially arranged within one of isolation chamber 4 and 6 and 8 and 13, in particular such that, in use, preforms 3 advance within isolation chambers 4 and 6 and bottles advance within isolation chambers 6, 8 and 13. In other words, at least prior to their closure bottles 2 remain within a controlled and/or defined atmosphere.

According to a preferred non-limiting embodiment, conveying device 16 comprises also one or more outlet conveyors 33, in particular outlet star wheels, configured to advance capped bottles 2 out of isolation chamber 13. Preferentially but not necessarily, each outlet conveyor 33 is at least partially arranged within isolation chamber 13.

According to preferred non-limiting embodiment, conveying device 16 also comprises one or more inlet conveyors 34, in particular inlet star wheels, configured to advance preforms 3 into and through sterilization unit 15 and to first conveyor 22.

With particular reference to Figures 1 and 2, isolation chamber 6 is connected to isolation chamber 4 and isolation chamber 8 is connected to isolation chamber 6. In particular, isolation chamber 6 is arranged downstream from isolation chamber 4 along advancement path P and isolation chamber 8 is arranged downstream from isolation chamber 6 along advancement path Q.

According to a preferred non-limiting embodiment, isolation chamber 6 and isolation chamber 4 are connected such that, in use, preforms 3 are transferred from isolation chamber 4 directly into isolation chamber 6, in particular without any particular passage. In other words, preforms 3 are exposed to the first and second gas atmosphere so as to be always exposed to a controlled and/or defined gas atmosphere.

According to a preferred, isolation chamber 6 and isolation chamber 8 are connected such that, in use, bottles 2 are transferred from isolation chamber 6 directly into isolation chamber 8. In other words, bottles 2 are exposed to the second and third gas atmosphere so as to be always exposed to a controlled and/or defined gas atmosphere.

According to a preferred non-limiting embodiment, isolation chamber 8 and isolation chamber 13 are connected such that, in use, bottles 2 are transferred from isolation chamber 8 directly into isolation chamber 13. In other words, bottles 2 are exposed to the third and fourth gas atmosphere so as to be always exposed to a controlled and/or defined gas atmosphere.

According to a preferred non-limiting embodiment, isolation chamber 13 is connected to isolation chamber 8. In particular, isolation chamber 13 is arranged downstream from isolation chamber 8 along advancement path Q.

According to a preferred non-limiting embodiment, each isolation chamber 4, 6, 8 and/or 13 is configured to be arranged on a horizontal surface (e.g. a floor of the production site) and comprises at least an upper wall distanced from the horizontal surface and a plurality of lateral walls connected to the respective upper wall so as to enclose a respective inner environment.

With particular reference to Figure 2, filter unit 17 comprises at least one filter element 35, in particular a high efficiency particulate air (HEPA) filter, for filtering the gas to be introduced into isolation chamber 4.

With particular reference to Figure 2, filter unit 18 comprises at least:
- a casing 38;
- an inlet duct 39 fluidically connected to suction device 19 and casing 38 and configured to allow the introduction of at least a portion of the extracted gas into casing 38;
- one or more filter elements 40, two in the example embodiment shown, arranged within casing 38 and configured to filter the gas directed into casing 38;

- a first outlet duct 41 fluidically connected to casing 38 and isolation chamber 6 and configured to guide and/or direct, in use, the first portion of the filtered gasinto isolation chamber 6; and
- a second outlet duct 42 fluidically connected to casing 38 and isolation chamber 8 and configured to guide and/or direct, in use, the second portion of gas filtered by filter element(s) 40 into isolation chamber 8.

According to a preferred non-limiting embodiment, filter unit 18 also comprises a third outlet duct 43 fluidically connected to casing 38 and isolation chamber 13 and configured to guide and/or direct, in use, the third portion of the filtered gas into isolation chamber 13.

Preferentially but not necessarily, outlet conducts 41, 42 and 43 are mounted directly or indirectly to the respective upper wall of respectively isolation chamber 6, 8 and 13.

It should be noted that the term centralized filter unit 18 implies that filter element (s) 40 are not specifically associated to one respective isolation chamber 6, 8 or 13, but filter element(s) 40 filter the gas, which is then divided into the first and second (and third) portions, so that first, second (and third) portion become introduced into respectively isolation chamber 6 and 8 (and 13) .

According to a preferred non-limiting embodiment, no further filter elements directly associated to isolation chamber 6, 8 and 13 are foreseen.

According to a preferred non-limiting embodiment, at least one filter element 40 is an ultra-low particle air (ULPA) filter.

With particular reference to Figure 2, suction device 19 comprises at least:
- one extraction conduct 44 fluidically connected to isolation chamber 4 and inlet conduct 39 and configured to guide and/or direct the extracted gas to and/or towards inlet conduct 39 and/or casing 38; and
- at least one suction element 45, such as a fan, configured to generate a suction force so as to at least extract the gas from isolation chamber 4 into extraction conduct 44 and to at least partially force the extracted gas through extraction conduct 44.

According to a preferred non-limiting embodiment, suction unit 44 is arranged within extraction conduct 44.

Preferentially but not necessarily, extraction conduct 44 is mounted onto the respective upper wall of isolation chamber 4.

With particular reference to Figure 2, filling plant 1 also comprises a flow dividing unit 46 fluidically connected to suction device 19 for receiving the extracted gas and configured to divide the extracted gas into at least a respective first portion and a respective second portion. In particular, flow dividing unit 46 is also fluidically connected to filter unit 18, in particular casing 38, even more particular inlet duct 39, and is configured to direct the first portion to, towards and/or into filter unit 18, in particular casing 38.

Preferentially but not necessarily, flow dividing unit 46 is configured to disperse the second portion into the environment.

Alternatively, flow dividing unit 46 could be configured to direct the second portion to further treatment devices and/or energy recovery devices.

With particular reference to Figure 2, filling plant 1 also comprises at least one conditioning unit 47 configured to condition the filtered gas and/or the gas to be filtered by filter unit 18. In particular, conditioning unit 47 is configured to at least partially condition the gas to be filtered prior to its filtration by filter unit 18.

According to the non-limiting embodiment shown, conditioning unit 47 is structurally separated from filter unit 18 and suction device 19. Alternatively, conditioning unit 47 could be structurally coupled and/or integrated to filter unit 18 and/or suction device 19.

According to a preferred non-limiting embodiment, conditioning unit 47 is configured to control the temperature of the filtered gas and/or the gas to be filtered by filter unit 18, in particular so that the temperature is below 36°C, even more particular that the temperature ranges between 20°C to 25°C and/or is substantially equal to the ambient temperature. In particular, in this way the possible growth of bacteria, microbes or similar is disfavored.

According to a preferred non-limiting embodiment, conditioning unit 47 is configured to mix at least the first portion of the extracted gas with a fresh gas, in particular fresh air, even more particular fresh ambient air, for controlling at least the temperature of the filtered gas and/or the gas to be filtered by filter unit 18.

According to a preferred non-limiting embodiment, the fresh gas is gas, which has not been extracted from any one of isolation chambers 4, 6, 8 and 13.

Preferentially but not necessarily, conditioning unit 47 is configured such to control the ratios between the fresh air and the first portion of the extracted air such that the temperature of the filtered gas and/or the gas to be filtered by filter unit 18 to be below 36°C, in particular to range between 20°C to 25°C and/or to substantially equal the ambient temperature.

In alternative or in addition, conditioning unit 47 could comprise a cooling unit, in particular a cooling unit of the known type, for controlling the temperature of the filtered gas and/or the gas to be filtered by filter unit 18 and/or the fresh gas and/or of at least the first portion of the extracted gas.

In particular, the temperature (of the first portion) of the extracted gas is a function of the pre-heating of preforms 3.

According to a preferred non-limiting embodiment, conditioning unit 47 is also configured to control the humidity of the gas to be filtered by filter unit 18 and/or the filtered gas.

According to a preferred non-limiting embodiment, filling plant 1 also comprises a flow control device (not specifically shown) configured to control at least the flow of the first portion and/or the second portion of the filtered gas within respectively isolation chambers 6 and 8.

Preferentially but not necessarily, the flow control device is also configured to control the flow of the third portion of the filtered gas within isolation chamber 13.

Preferentially but not necessarily, the flow control device is configured such:
- to control the flow of the first portion of the filtered gas from a respective top portion to a respective bottom portion of isolation chamber 6; and/or
- to control the flow of the second portion of the filtered gas from a respective top portion to a respective bottom portion of isolation chamber 8; and/or
- to control the flow of the third portion of the filtered gas from a respective top portion to a respective bottom portion of isolation chamber 13; and/or
- to control a pressure within isolation chamber 6 to substantially equal the ambient pressure; and/or
- to control a positive pressure within isolation chamber 6 and/or 13 such that the positive pressure is larger than the ambient pressure, in particular being about 10 Pa to 26 Pa larger than the ambient pressure, even more particular being about 15 Pa to 20 Pa above the ambient pressure; and/or
- to control a flow of gas from a respective bottom portion to a respective top portion of isolation chamber 4.

In particular, the positive pressure within isolation chamber 8 guarantees that a gas exchange between isolation chamber 6 and 8 can only occur from isolation chamber 8 to isolation chamber 6.

In particular, the positive pressure within isolation chamber 13 guarantees that no external gases can enter isolation chamber 13.

Preferentially but not necessarily, the flow control device comprises at least:
- at least one respective fan and/or blower associated to isolation chamber 6 configured to generate the flow of the first portion of the filtered gas from the respective top to the respective bottom portion of isolation chamber 6; and/or
- at least one respective fan and/or blower associated to isolation chamber 8 and configured to generate the flow of the second portion of the filtered gas from the respective top to the respective bottom portion of isolation chamber 8; and/or
- at least one respective fan and/or blower associated to isolation chamber 13 and configured to generate the flow of the third portion of the filtered gas from the respective top to the respective bottom portion of isolation chamber 13; and/or
- at least one respective fan and/or blower associated to isolation chamber 4 and configured to generate the flow from the respective bottom to the respective top portion of isolation chamber 4.

It should be noted that a gas flow within isolation chamber 6 and/or 8 and/or 13 from the respective top to the respective bottom portion allows to ensure that contaminations present on the outer surfaces of bottles 2 are directed away from the respective pour openings of bottles 2.

According to a preferred non-limiting embodiment, the respective interfaces between isolation chamber 4 and 5, and/or isolation chamber 6 and 8 are defined by the respective flow directions of the respective gases and/or the respective gas pressures.

Preferentially but not necessarily, the flow control device further comprises:
- at least one respective aspirator associated to the respective bottom portion of isolation chamber 6 and configured to create a suction force within isolation chamber 6, in particular in the area of the bottom portion of isolation chamber 6, so as to further support the flow of the first portion of the filtered gas from the respective top to the respective bottom portion; and/or
- at least one respective aspirator associated to the respective bottom portion of isolation chamber 8 and configured to create a suction force within isolation chamber 8, in particular in the area of the bottom portion of isolation chamber 8, so as to further support the flow of the second portion of the filtered gas from the respective top to the respective bottom portion; and/or
- at least one respective aspirator associated to the respective bottom portion of isolation chamber 13 and configured to create a suction force within isolation chamber 13, in particular in the area of the bottom portion of third isolation chamber 13, so as to further support the flow of the third portion of the filtered gas from the respective top to the respective bottom portion.

In use, filling plant 1 forms bottles 2 from preforms 3 and fills the obtained bottles 2 with the pourable product.

In particular, operation of filling plant 1 comprises at least the following steps:
- pre-heating preforms 3 within isolation chamber 4;
- filtering gas by filter unit 17 and introducing the filtered gas into isolation chamber 4;
- molding preforms 3 into bottles 2 within isolation chamber 6;
- filling bottles 2 within isolation chamber 8 with the pourable product;
- extracting gas from isolation chamber 4 and feeding at least the first portion of the extracted gas into centralized filter unit 18, in particular casing 38;
- filtering at least the first portion of the extracted gas by filter element(s) 40 for obtaining the filtered gas;
- directing at least the first portion of the filtered gas into isolation chamber 6 and at least the second portion of the filtered gas into isolation chamber 8, and preferentially but not necessarily the third portion of the filtered gas into isolation chamber 13.

According to a preferred non-limiting embodiment, operation of filling plant 1 also comprises the step of closing bottles 2, during which closures are applied and fastened, in particular by the capping units, on bottles 2.

According to a preferred non-limiting embodiment, operation of filling plant 1 also comprises at least:
- a first step of advancing of preforms 3, during which preforms 3 are advanced along advancement path P, in particular by conveying device 16; and
- a second step of advancing of bottles 2, during which bottles 2 are advanced along advancement path Q, in particular by conveying device 16.

According to a preferred non-limiting embodiment, operation of filling plant 1 also comprises a step of sterilization, during which preforms 3 are at least internally sterilized, in particular within sterilization unit 15. More specifically during the step of sterilization, a sterilization agent is introduced at least into preforms 3.

According to a preferred non-limiting embodiment, during the step of pre-heating, preforms 3 are heated by heating groups 21 during advancement along heating portion PI, in particular while being advanced by conveying device 16, even more particular by first conveyor 22.

According to a preferred non-limiting embodiment, during the step of molding, preforms 3 are molded into bottles 2 during advancement of preforms 3 along molding portion P2, in particular while being advanced by second conveyor 27. In particular, during the step of molding, preforms 3 are retained and molded within molding units 26.

Preferentially but not necessarily, during the step of molding, preforms 3 are molded into bottles 2 by means of blow or compression molding.

According to a preferred non-limiting embodiment, during the step of filling, bottles 2 advance along filling portion Q2, in particular being advanced by third conveyor 29. In particular, during advancement along filling portion Q2, bottles 2 are retained and filled by the respective filling unit.

According to a preferred non-limiting embodiment, during the step of extracting gas, suction device 19 extracts the gas from isolation chamber 4 and directs the extracted gas towards filter unit 18. In particular, suction element 45 creates the suction force and at least partially forces the extracted gas through extraction conduct 44.

According to a preferred non-limiting embodiment, operation of filling plant 1 also comprises a step of dividing, during which the extracted gas is divided, in particular by flow dividing unit 46, into the first portion and the second portion of the extracted gas. In particular, the first portion of the extracted gas is directed into and/or towards filter unit 18.

According to a preferred non-limiting embodiment, during the step of directing the filtered gas, the first and second (and third) portions of the filtered gas are directed into respectively isolation chamber 6 and 8 (and 13) through respectively outlet conduct 41 and 42 (and 43).

According to a preferred non-limiting embodiment, operation of filling plant 1 also comprises a step of conditioning, during which at least the filtered gas or the gas to be filtered by filter unit 18 is conditioned, in particular by conditioning unit 47.

Preferentially but not necessarily, during the step of conditioning, the temperature of the filtered gas and/or the gas to be filtered by filter unit 18 is controlled, in particular so that the temperature is below 36°C, even more particular to range between 20°C to 25°C and/or to substantially equal the ambient temperature.

Preferentially but not necessarily, during the step of conditioning, at least the first portion of the extracted gas is mixed with a fresh gas so as to control the temperature of the filtered gas and/or of the gas to be filtered by filter unit 18. In particular, the ratio between the fresh gas and the first portion of the extracted gas is such that the temperature of the obtained gas mixture is below 36°C, in particular ranging between 20°C to 25°C and/or to substantially equal the ambient temperature.

In alternative or in addition, during the step of conditioning, the temperature of the filtered gas and/or the gas to be filtered by filter unit 18 and/or the fresh gas and/or at least the first portion of the extracted gas is controlled by means of a cooling unit.

Preferentially but not necessarily, during the step of conditioning, the humidity of the gas to be filtered and/or the gas to be filtered by filter unit 18 is controlled.

According to a preferred non-limiting embodiment, operation of filling plant 1 also comprises the step of:
- controlling, in particular by means of the flow control device, the flow of the first portion of the filtered gas from the respective top to the respective bottom portion of isolation chamber 6; and/or
- controlling, in particular by means of the flow control device, the flow of the second portion of the filtered gas from the respective top portion to the respective bottom portion of isolation chamber 8; and/or
- controlling, in particular by means of the flow control device, the pressure within isolation chamber 6 to equal substantially the ambient pressure; and/or
- controlling, in particular by means of the flow control device, a positive pressure within isolation chamber 8 and/or isolation chamber 13 to be larger than the ambient pressure, in particular being about 10 Pa to 26 Pa, even more particular being about 15 Pa to 20 Pa above the ambient pressure.

Preferentially but not necessarily, operation of filling plant 1 also comprises the step of applying a suction force in the area of, in particular at, the respective bottom portion of isolation chamber 6 and/or 8 and/or 13.

The advantages of filling plant 1 and the method of operation of filling plant 1 according to the present invention will be clear from the foregoing description.

In particular, filling plant 1 allows a more efficient use of gases, which are to be introduced into isolation chambers 4, 6, 8 and 13. The gas, which becomes introduced into isolation chamber 4 is filtered by filter unit 17 and, thus, the extracted gas is purer than gas originating from the outer environment. By using some of the extracted gas to be filtered within filter unit 18 and being introduced into at least isolation chambers 6 and 8 it is possible to increase the quality of the filtered gas.

A further advantage resides in controlling the temperature of the filtered gas and/or the gas to be filtered by e.g. mixing the first portion of the extracted gas with a fresh gas so as to control the temperature. This is in particular advantageous for obtaining a temperature below 36 °C so as to disfavor the growth of bacteria, microbes or similar.

An even further advantage resides in controlling a flow of the gases within isolation chambers 6, 8 and 13 from the respective top to the respective bottom portions. In this way, possible contaminations present on the outer surfaces of preforms 3 and/or bottles 2 are distanced from the respective openings.

Clearly, changes may be made to filling plant 1 and/or the method as described herein without, however, departing from the scope of protection as defined in the accompanying claims.

## Claims

1. Filling plant (1) for producing bottles (2) from respective pre-forms (3) and filling the bottles (2) with a pourable product comprising:
- a pre-heating oven (5) at least partially arranged within a first isolation chamber (4) and configured to pre-heat the pre-forms (3) within the first isolation chamber (4) ;
- a first filter unit (17) associated to the first isolation chamber (4) and configured to filter a gas to be introduced into the first isolation chamber (4);
- a molding apparatus (7) being at least partially arranged within a second isolation chamber (6) and configured to mold the preforms (3) into the bottles (2) within the second isolation chamber (6);
- a filling apparatus (9) being at least partially arranged within a third isolation chamber (8) and being configured to fill the bottles (2) within the third isolation chamber (8); the filling plant being **characterized by**:
- a centralized filter unit (18) configured to filter at least a gas for obtaining a filtered gas and to feed at least a first portion of the filtered gas into the second isolation chamber (6) and at least a second portion of the filtered gas into the third isolation chamber (8); and
- a suction device (19) fluidically connected to the first isolation chamber (4) and the centralized filter unit (18) and configured to extract gas from the first isolation chamber (4) and to direct at least a portion of the extracted gas to the centralized filter unit (18).

2. Filling plant according to claim 1, wherein the centralized filter unit (18) comprises at least:
- a casing (38);
- an inlet duct (39) fluidically connected to the suction device (19) and the casing (38) and configured to guide and/or direct at least a portion of the extracted gas into the casing (38);
- one or more filter elements (40) arranged within the casing (38) and configured to filter the gas directed into the casing (38) for obtaining the filtered gas;
- a first outlet duct (41) fluidically connected to the casing (38) and the second isolation chamber (6) and configured to direct and/or guide the first portion of the filtered gas into the second isolation chamber (6); and
- a second outlet duct (42) fluidically connected to the casing (38) and the third isolation chamber (8) and configured to direct and/or guide at least the second portion of the filtered gas, in use, into the third isolation chamber (8) .

3. Filling plant according to claim 1 or 2, further comprising a conditioning unit (47) configured to condition the filtered gas or the gas to be filtered by the centralized filter unit (18).

4. Filling plant according to claim 3, wherein the conditioning unit (47) is configured to mix at least a portion of the extracted gas with a fresh gas for controlling the temperature of the filtered gas.

5. Filling plant according to any one of the preceding claims, further comprising a flow control device configured to control at least the flow of the first portion of the filtered gas within the second isolation chamber (6) and/or of the second portion of the filtered gas within the third isolation chamber (8).

6. Filling plant according to claim 5, wherein the flow control device is configured such:
- to control the flow of the first portion and/or of the second portion of the filtered gas from a respective top portion to a respective bottom portion of respectively the second isolation chamber (6) and the third isolation chamber (8); and/or
- to control a pressure within the second isolation (6) chamber to substantially equal the ambient pressure;
- to control a positive pressure within the third isolation chamber (8) such to be larger than the ambient pressure.

7. Filling plant according to claim 6, wherein the flow control device comprises at least:
- one respective fan associate to the second isolation chamber configured to generate the flow of the first portion of the filtered gas from the respective top portion to the respective bottom portion of the second isolation chamber (6); and/or
- one respective fan associated to the third isolation chamber and configured to generate the flow of the second portion of the filtered gas from the respective top portion to the respective bottom portion of the third isolation chamber (8).

8. Filling plant according to claim 6 or 7, wherein the flow control device comprises:
- at least one respective aspirator associated to the respective bottom portion of the second isolation chamber (6) and configured to create a suction force within the second isolation chamber (6) in the area of the bottom portion of the second isolation chamber (6); and/or
- at least one respective aspirator associated to the respective bottom portion of the third isolation chamber (8) and configured to create a suction force within the third isolation chamber (8) in the area of the bottom portion of the third isolation chamber (8).

9. Filling plant according to any one of the preceding claims, further comprising a conveying apparatus (16) configured to advance the pre-forms (3) along a first advancement path (P) to, through and from the pre-heating oven (5) and to advance the bottles (2) along a second advancement path (Q) through the molding apparatus (7) and to and through the filling apparatus (9).

10. Filling plant according to any one of the preceding claims, wherein the centralized filter unit (18) comprises at least one ultra-low particle air filter (40).

11. Method for producing bottles (2) from respective pre-forms (3) and filling the bottles (2) with a pourable product comprising at least the steps of:
- pre-heating the preforms (3) within a first isolation chamber (4);
- introducing a gas filtered by a first filter unit (17) associated to the first isolation chamber (4) into the first isolation chamber (4);
- molding the preforms (3) into the bottles (2) within a second isolation chamber (6);
- filling the bottles (2) within a third isolation chamber (8) with the pourable product;
- extracting gas from the first isolation chamber (4) and feeding at least a portion of the extracted gas into the centralized filter unit (18); the method being **characterized by**:
- filtering at least the portion of the extracted gas by at least one filter element (40) of the centralized filter unit (18) for obtaining a filtered gas;
- directing at least a first portion of the filtered gas into the second isolation chamber (6) and at least a second portion of the filtered gas into the third isolation chamber (8).

12. The method according to claim 11, further comprising a step of conditioning during which the filtered gas or the gas to be filtered by the centralized filter unit (18) is conditioned.

13. The method according to claim 12, wherein during the step of conditioning, at least the portion of the extracted air is mixed with fresh air so as to control the temperature of the filtered gas and/or of the gas to be filtered.

14. The method according to any one of claims 11 to 13, further comprising the step of:
- controlling the flow of the first portion of the filtered gas from a top portion to a bottom portion of the second isolation chamber (6); and/or
- controlling the flow of the second portion of the filtered gas from a top portion to a bottom portion of the third isolation chamber (8); and/or
- controlling the pressure within the second isolation chamber (6) to equal substantially the ambient pressure; and/or
- controlling a positive pressure within the third isolation chamber (8) to be larger than the ambient pressure.

15. The method according to any one of claims 11 to 14, further comprising the step of applying a suction force in the area of a respective bottom portion of the second isolation chamber (6) and/or the third isolation chamber (8) .

## Patentansprüche

1. Füllanlage (1) zur Herstellung von Flaschen (2) aus entsprechenden Vorformen (3) und zum Befüllen der Flaschen (2) mit einem fließfähigen Produkt, Folgendes umfassend:
- einen Vorwärmofen (5), zumindest teilweise innerhalb einer ersten Isolationskammer (4) angeordnet und dazu ausgelegt, die Vorformen (3) innerhalb der ersten Isolationskammer (4) vorzuerwärmen;
- eine erste Filtereinheit (17), verbunden mit der ersten Isolationskammer (4) und dazu ausgelegt, ein in die erste Isolationskammer (4) einzuführendes Gas zu filtern;
- eine Formungseinrichtung (7), die zumindest teilweise innerhalb einer zweiten Isolationskammer (6) angeordnet ist und dazu ausgelegt ist, die Vorformen (3) innerhalb der zweiten Isolationskammer (6) in Flaschen (2) zu formen;
- eine Fülleinrichtung (9), die zumindest teilweise innerhalb einer dritten Isolationskammer (8) angeordnet ist und dazu ausgelegt ist, die Flaschen (2) innerhalb der dritten Isolationskammer (8) zu füllen; wobei die Füllanlage **gekennzeichnet ist durch**:
- eine zentralisierte Filtereinheit (18), dazu ausgelegt, zumindest ein Gas zu filtern, um ein gefiltertes Gas zu erhalten, und zumindest einen ersten Teil des gefilterten Gases in die zweite Isolationskammer (6) und zumindest einen zweiten Teil des gefilterten Gases in die dritte Isolationskammer (8) zuzuführen; und
- eine Saugvorrichtung (19), fluidisch mit der ersten Isolationskammer (4) und der zentralisierten Filtereinheit (18) verbunden und dazu ausgelegt, Gas aus der ersten Isolationskammer (4) zu extrahieren und zumindest einen Teil des extrahierten Gases zur zentralisierten Filtereinheit (18) zu leiten.

2. Füllanlage nach Anspruch 1, wobei die zentralisierte Filtereinheit (18) zumindest Folgendes umfasst:
- ein Gehäuse (38);
- einen Einlasskanal (39), fluidisch verbunden mit der Saugvorrichtung (19) und dem Gehäuse (38) und dazu ausgelegt, zumindest einen Teil des extrahierten Gases in das Gehäuse (38) zu führen und/oder zu leiten;
- ein oder mehrere Filterelemente (40), angeordnet innerhalb des Gehäuses (38) und dazu ausgelegt, das in das Gehäuse (38) geleitete Gas zu filtern, um das gefilterte Gas zu erhalten;
- einen ersten Auslasskanal (41), fluidisch verbunden mit dem Gehäuse (38) und der zweiten Isolationskammer (6) und dazu ausgelegt, den ersten Teil des gefilterten Gases in die zweite Isolationskammer (6) zu leiten und/oder zu führen; und
- einen zweiten Auslasskanal (42), fluidisch verbunden mit dem Gehäuse (38) und der dritten Isolationskammer (8) und dazu ausgelegt, bei Verwendung, zumindest den zweiten Teil des gefilterten Gases in die dritte Isolationskammer (8) zu leiten und/oder zu führen.

3. Füllanlage nach Anspruch 1 oder 2, ferner umfassend eine Konditionierungseinheit (47), dazu ausgelegt, das gefilterte Gases oder das durch die zentralisierte Filtereinheit (18) zu filternde Gas zu konditionieren.

4. Füllanlage nach Anspruch 3, wobei die Konditionierungseinheit (47) dazu ausgelegt ist, zumindest einen Teil des extrahierten Gases mit einem frischen Gas zu mischen, um die Temperatur des gefilterten Gases zu steuern.

5. Füllanlage nach einem der vorhergehenden Ansprüche, ferner umfassend eine Durchflusssteuerungsvorrichtung, dazu ausgelegt, zumindest den Durchfluss des ersten Teils des gefilterten Gases innerhalb der zweiten Isolationskammer (6) und/oder des zweiten Teils des gefilterten Gases innerhalb der dritten Isolationskammer (8) zu steuern.

6. Füllanlage nach Anspruch 5, wobei die Durchflusssteuerungsvorrichtung so ausgelegt ist zum:
- Steuern des Durchflusses des ersten Teils und/oder des zweiten Teils des gefilterten Gases aus einem entsprechenden oberen Teil zu einem entsprechenden unteren Teil der zweiten Isolationskammer (6) bzw. der dritten Isolationskammer (8); und/oder
- Steuern des Druckes innerhalb der zweiten Isolationskammer (6), um im Wesentlichen gleich dem Umgebungsdruck zu sein;
- Steuern eines positiven Druckes innerhalb der dritten Isolationskammer (8), um größer als der Umgebungsdruck zu sein.

7. Füllanlage nach Anspruch 6, wobei die Durchflusssteuerungsvorrichtung zumindest Folgendes umfasst:
- ein entsprechendes Gebläse, verbunden mit der zweiten Isolationskammer, dazu ausgelegt, den Durchfluss des ersten Teils des gefilterten Gases vom entsprechenden oberen Teil zum entsprechenden unteren Teil der zweiten Isolationskammer (6) zu erzeugen; und/oder
- ein entsprechendes Gebläse, verbunden mit der dritten Isolationskammer, dazu ausgelegt, den Durchfluss des zweiten Teils des gefilterten Gases vom entsprechenden oberen Teil zum entsprechenden unteren Teil der dritten Isolationskammer (8) zu erzeugen.

8. Füllanlage nach Anspruch 6 oder 7, wobei die Durchflusssteuerungsvorrichtung Folgendes umfasst:
- zumindest einen entsprechenden Aspirator, verbunden mit dem entsprechenden unteren Teil der zweiten Isolationskammer (6) und dazu ausgelegt, eine Saugkraft innerhalb der zweiten Isolationskammer (6) im Bereich des unteren Teils der zweiten Isolationskammer (6) zu erzeugen; und/oder
- zumindest einen entsprechenden Aspirator, verbunden mit dem entsprechenden unteren Teil der dritten Isolationskammer (8) und dazu ausgelegt, eine Saugkraft innerhalb der dritten Isolationskammer (8) im Bereich des unteren Teils der dritten Isolationskammer (8) zu erzeugen.

9. Füllanlage nach einem der vorhergehenden Ansprüche, ferner umfassend eine Fördereinrichtung (16), dazu ausgelegt, die Vorformen (3) entlang eines ersten Fortbewegungspfades (P) zum, durch den und vom Vorwärmofen (5) fortzubewegen und die Flaschen (2) entlang eines zweiten Fortbewegungspfades (Q) durch die Formungseinrichtung (7) und zur und durch die Fülleinrichtung (9) fortzubewegen.

10. Füllanlage nach einem der vorhergehenden Ansprüche, wobei die zentralisierte Filtereinheit (18) zumindest einen Luftfilter für ultraniedrigen Partikelgehalt (40) umfasst.

11. Verfahren zur Herstellung von Flaschen (2) aus entsprechenden Vorformen (3) und zum Befüllen der Flaschen (2) mit einem fließfähigen Produkt, das zumindest die folgenden Schritte umfasst:
- Vorwärmen der Vorformen (3) innerhalb einer ersten Isolationskammer (4);
- Einführen eines durch eine erste Filtereinheit (17) in Verbindung mit der ersten Isolationskammer (4) gefilterten Gases in die erste Isolationskammer (4);
- Formen der Vorformen (3) in die Flaschen (2) innerhalb einer zweiten Isolationskammer (6);
- Befüllen der Flaschen (2) innerhalb einer dritten Isolationskammer (8) mit dem fließfähigen Produkt;
- Extrahieren von Gas aus der ersten Isolationskammer (4) und Zuführen von zumindest einem Teil des extrahierten Gases in die zentralisierte Filtereinheit (18); wobei das Verfahren **gekennzeichnet ist durch**:
- Filtern zumindest des Teils des extrahierten Gases durch zumindest ein Filterelement (40) der zentralisierten Filtereinheit (18) zum Erhalten eines gefilterten Gases;
- Leiten zumindest eines ersten Teils des gefilterten Gases in die zweite Isolationskammer (6) und zumindest eines zweiten Teils des gefilterten Gases in die dritte Isolationskammer (8).

12. Verfahren nach Anspruch 11, ferner umfassend einen Schritt des Konditionierens, während dessen das gefilterte Gas oder das durch die zentralisierte Filtereinheit (18) zu filternde Gas konditioniert werden.

13. Verfahren nach Anspruch 12, wobei während des Schrittes des Konditionierens zumindest der Teil der extrahierten Luft mit frischer Luft gemischt wird, um die Temperatur des gefilterten Gases und/oder des zu filternden Gases zu steuern.

14. Verfahren nach einem der Ansprüche 11 bis 13, das ferner die folgenden Schritte umfasst:
- Steuern des Durchflusses des ersten Teils des gefilterten Gases aus einem oberen Teil zu einem unteren Teil der zweiten Isolationskammer (6); und/oder
- Steuern des Durchflusses des zweiten Teils des gefilterten Gases aus einem oberen Teil zu einem unteren Teil der dritten Isolationskammer (8); und/oder
- Steuern des Druckes innerhalb der zweiten Isolationskammer (6), um im Wesentlichen gleich dem Umgebungsdruck zu sein; und/oder
- Steuern eines positiven Druckes innerhalb der dritten Isolationskammer (8), um größer als der Umgebungsdruck zu sein.

15. Verfahren nach einem der Ansprüche 11 bis 14, ferner umfassend den Schritt des Anwendens einer Saugkraft im Bereich eines entsprechenden unteren Teils der zweiten Isolationskammer (6) und/oder der dritten Isolationskammer (8).

## Revendications

1. Installation de remplissage (1) pour produire des bouteilles (2) à partir de préformes respectives (3) et remplir les bouteilles (2) avec un produit versable, comprenant :
- un four de préchauffage (5) au moins partiellement agencé à l'intérieur d'une première chambre d'isolation (4) et configuré pour préchauffer les préformes (3) à l'intérieur de la première chambre d'isolation (4) ;
- une première unité de filtration (17) associée à la première chambre d'isolation (4) et configurée pour filtrer un gaz destiné à être introduit dans la première chambre d'isolation (4) ;
- un appareil de moulage (7) au moins partiellement agencé à l'intérieur d'une deuxième chambre d'isolation (6) et configuré pour mouler les préformes (3) en les bouteilles (2) à l'intérieur de la deuxième chambre d'isolation (6) ;
- un appareil de remplissage (9) au moins partiellement agencé à l'intérieur d'une troisième chambre d'isolation (8) et configuré pour remplir les bouteilles (2) à l'intérieur de la troisième chambre d'isolation (8) ; l'installation de remplissage étant **caractérisée par** :
- une unité de filtration centralisée (18) configurée pour filtrer au moins un gaz pour obtenir un gaz filtré et pour effectuer l'alimentation en au moins une première partie du gaz filtré dans la deuxième chambre d'isolation (6) et en au moins une seconde partie du gaz filtré dans la troisième chambre d'isolation (8) ; et
- un dispositif d'aspiration (19) fluidiquement raccordé à la première chambre d'isolation (4) et l'unité de filtration centralisée (18) et configuré pour extraire un gaz à partir de la première chambre d'isolation (4) et pour orienter au moins une partie du gaz extrait vers l'unité de filtration centralisée (18).

2. Installation de remplissage selon la revendication 1, dans laquelle l'unité de filtration centralisée (18) comprend au moins :
- un boîtier (38) ;
- une conduite d'entrée (39) fluidiquement raccordée au dispositif d'aspiration (19) et au boîtier (38) et configuré pour guider et/ou orienter au moins une partie du gaz extrait dans le boîtier (38) ;
- un ou plusieurs éléments de filtration (40) agencés à l'intérieur du boîtier (38) et configurés pour filtrer le gaz dirigé dans le boîtier (38) pour obtenir le gaz filtré ;
- une première conduite de sortie (41) fluidiquement raccordée au boîtier (38) et à la deuxième chambre d'isolation (6) et configurée pour orienter et/ou guider la première partie du gaz filtré dans la deuxième chambre d'isolation (6) ; et
- une seconde conduite de sortie (42) fluidiquement raccordée au boîtier (38) et à la troisième chambre d'isolation (8) et configurée pour orienter et/ou guider au moins la seconde partie du gaz filtré, durant l'utilisation, dans la troisième chambre d'isolation (8).

3. Installation de remplissage selon la revendication 1 ou 2, comprenant en outre une unité de conditionnement (47) configurée pour conditionner le gaz filtré ou le gaz destiné à être filtré par l'unité de filtration centralisée (18).

4. Installation de remplissage selon la revendication 3, dans laquelle l'unité de conditionnement (47) est configurée pour mélanger au moins une partie du gaz extrait avec un gaz frais pour commander la température du gaz filtré.

5. Installation de remplissage selon l'une quelconque des revendications précédentes, comprenant en outre un dispositif de commande de débit configuré pour commander au moins le débit de la première partie du gaz filtré à l'intérieur de la deuxième chambre d'isolation (6) et/ou de la seconde partie du gaz filtré à l'intérieur de la troisième chambre d'isolation (8).

6. Installation de remplissage selon la revendication 5, dans laquelle le dispositif de commande de débit est configuré afin :
- de commander le débit de la première partie et/ou de la seconde partie du gaz filtré depuis une partie supérieure respective jusqu'à une partie inférieure respective, respectivement de la deuxième chambre d'isolation (6) et de la troisième chambre d'isolation (8) ; et/ou
- de commander une pression à l'intérieur de la deuxième chambre d'isolation (6) pour qu'elle soit sensiblement égale à la pression ambiante ;
- de commander une pression positive à l'intérieur de la troisième chambre d'isolation (8) pour qu'elle soit supérieure à la pression ambiante.

7. Installation de remplissage selon la revendication 6, dans laquelle le dispositif de commande de débit comprend au moins :
- un ventilateur respectif associé à la deuxième chambre d'isolation, configuré pour générer le débit de la première partie du gaz filtré depuis la partie supérieure respective jusqu'à la partie inférieure respective de la deuxième chambre d'isolation (6) ; et/ou
- un ventilateur respectif associé à la troisième chambre d'isolation et configuré pour générer le débit de la seconde partie du gaz filtré depuis la partie supérieure respective jusqu'à la partie inférieure respective de la troisième chambre d'isolation (8).

8. Installation de remplissage selon la revendication 6 ou 7, dans laquelle le dispositif de commande de débit comprend :
- au moins un aspirateur respectif associé à la partie inférieure respective de la deuxième chambre d'isolation (6) et configuré pour créer une force d'aspiration à l'intérieur de la deuxième chambre d'isolation (6) dans la zone de la partie inférieure de la deuxième chambre d'isolation (6) ; et/ou
- au moins un aspirateur respectif associé à la partie inférieure respective de la troisième chambre d'isolation (8) et configuré pour créer une force d'aspiration à l'intérieur de la troisième chambre d'isolation (8) dans la zone de la partie inférieure de la troisième chambre d'isolation (8).

9. Installation de remplissage selon l'une quelconque des revendications précédentes, comprenant en outre un appareil de transport (16) configuré pour faire avancer les préformes (3) le long d'un premier trajet d'avance (P) jusqu'au, à travers le, et à partir du, four de préchauffage (5) et pour faire avancer les bouteilles (2) le long d'un second trajet d'avance (Q) à travers l'appareil de moulage (7) et jusqu'à et à travers l'appareil de remplissage (9).

10. Installation de remplissage selon l'une quelconque des revendications précédentes, dans laquelle l'unité de filtration centralisée (18) comprend au moins un filtre à air à microparticules (40).

11. Procédé pour produire des bouteilles (2) à partir de préformes respectives (3) et remplir les bouteilles (2) avec un produit versable, comprenant au moins les étapes de :
- le préchauffage des préformes (3) à l'intérieur d'une première chambre d'isolation (4) ;
- l'introduction d'un gaz filtré par une première unité de filtration (17) associée à la première chambre d'isolation (4) dans la première chambre d'isolation (4) ;
- le moulage des préformes (3) en les bouteilles (2) à l'intérieur d'une deuxième chambre d'isolation (6) ;
- le remplissage des bouteilles (2) à l'intérieur d'une troisième chambre d'isolation (8) avec le produit versable ;
- l'extraction de gaz à partir de la première chambre d'isolation (4) et l'alimentation en au moins une partie du gaz extrait dans l'unité de filtration centralisée (18) ; le procédé étant **caractérisé par** :
- la filtration d'au moins la partie du gaz extrait par au moins un élément de filtration (40) de l'unité de filtration centralisée (18) pour obtenir un gaz filtré ;
- l'orientation d'au moins une première partie du gaz filtré dans la deuxième chambre d'isolation (6) et d'au moins une seconde partie du gaz filtré dans la troisième chambre d'isolation (8).

12. Procédé selon la revendication 11, comprenant en outre une étape de conditionnement durant laquelle le gaz filtré ou le gaz destiné à être filtré par l'unité de filtration centralisée (18) est conditionné.

13. Procédé selon la revendication 12, dans lequel, durant l'étape de conditionnement, au moins la partie de l'air extrait est mélangée avec de l'air frais afin de commander la température du gaz filtré et/ou du gaz destiné à être filtré.

14. Procédé selon l'une quelconque des revendications 11 à 13, comprenant en outre l'étape de :
- la commande du débit de la première partie du gaz filtré depuis une partie supérieure jusqu'à une partie inférieure de la deuxième chambre d'isolation (6) ; et/ou
- la commande du débit de la seconde partie du gaz filtré depuis une partie supérieure jusqu'à une partie inférieure de la troisième chambre d'isolation (8) ; et/ou
- la commande de la pression à l'intérieur de la deuxième chambre d'isolation (6) pour qu'elle soit sensiblement égale à la pression ambiante ; et/ou
- la commande d'une pression positive à l'intérieur de la troisième chambre d'isolation (8) pour qu'elle soit supérieure à la pression ambiante.

15. Procédé selon l'une quelconque des revendications 11 à 14, comprenant en outre l'étape de l'application d'une force d'aspiration dans la zone d'une partie inférieure respective de la deuxième chambre d'isolation (6) et/ou de la troisième chambre d'isolation (8).
